# EUROPEAN PATENT APPLICATION

(11) **EP 4 734 616 A1**
(43) Date of publication of application: **29.04.2026**
(21) Application number: 23941908.8
(22) Date of filing: 20.06.2023
(51) Int. Cl.: H04W 52/02

(54) **INFORMATION INDICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2023/101537
(87) International publication number: WO 2024/259604

(57) **Abstract**

The embodiments of the present application provide an information indication method, and a device. The information indication method comprises: a terminal device receiving an indication of a network device with respect to time information, wherein a time range corresponding to the time information is configured by the network device. The embodiments of the present application can reduce the power consumption of a terminal device caused by receiving time information, thereby achieving an energy-saving effect.

## Description

### TECHNICAL FIELD

The present disclosure relates to the field of communications, and more particularly, to an information indication method and device.

### BACKGRUND

In a communication system, in order to communicate normally, a terminal device needs to maintain an internal timer. For example, a network device transmits time information (such as timestamp information) to the terminal device, and the terminal device adjusts the internal timer according to the time information. In the related art, when the network device transmits the time information to the terminal device, the time information indicates the number of microseconds that have passed since the network startedoperating. For example, the time information is carried or indicated by a timestamp field with a length of 64 bits, a time range corresponding to the time information is approximately 580,000 years, for most terminal devices, such a long time range is obviously unnecessary; and receiving the time information with the length of 64 bits will cause the terminal device to consume too much power, which is not conducive to energy saving.

### SUMMARY

Embodiments of the present disclosure provide an information indication method, a device, a computer-readable storage medium, a computer program product, and a computer program.

The embodiment of present disclosure provides an information indication method, and the method includes:
indicating, by a network device, time information to a terminal device, where a time range corresponding to the time information is configured by the network device.

The embodiment of the present disclosure also provides an information indication method, and the method includes:
receiving, by a terminal device, an indication for time information from a network device, where a time range corresponding to the time information is configured by the network device.

The embodiment of present disclosure also provides a terminal device, and the terminal device includes:
a first receiving module, configured to receive an indication for time information from a network device, where a time range corresponding to the time information is configured by the network device.

The embodiment of the present disclosure also provides a network device, and the network device includes:
an indicating module, configured to indicate time information to a terminal device, where a time range corresponding to the time information is configured by the network device.

The embodiment of the present disclosure also provides a communication device, and the communication device includes a processor, a memory, and a transceiver. The memory is used to store a computer program, and the processor is used to invoke and run the computer program stored in the memory and control the transceiver, so as to enable the device to perform the above method.

The embodiment of the present disclosure also provides a chip for implementing the above method.

Specifically, the chip includes a processor, where the processor is used to invoke a computer program from a memory and run the computer program, so as to enable a device equipped with the chip to perform the above method.

The embodiment of the present disclosure also provides a computer-readable storage medium for storing a computer program, where the computer program, when being executed by a device, enables the device to perform the above method.

The embodiment of the present disclosure also provides a computer program product, including a computer program instruction, where the computer program instruction enables a computer to perform the above method.

The embodiment of the present disclosure also provides a computer program that, when being executed on a computer, enables a computer to perform the above method.

By adopting the solution provided in the embodiment of the present disclosure, a terminal device may receive indication for time information from a network device, and a time range corresponding to the time information may be configured by the network device; since the time range may be configured by the network device, the time range corresponding to the time information is capable of matching the continuousoperating time of the terminal device, and there is no need to use excessively long bits to indicate the time information, thereby the power consumption of the terminal device can be reduced due to receiving the time information, so as to achieve an energy-saving effect. The solution proposed in the embodiment of the present disclosure is particularly suitable for a terminal device, such as a zero power terminal and an ambient powered internet of things (IoT) device.

### BRIEF DESCRIPTION OF THE DRAWINGS

FIG. 1 is a diagram of an application scenario of an embodiment of the present disclosure.
FIG. 2 is a schematic flowchart of an information indication method 200 according to an embodiment of the present disclosure.
FIG. 3 is a schematic flowchart of an information indication method 300 according to an embodiment of the present disclosure.
FIG. 4 is a diagram illustrating a time range corresponding to time information including multiple beacon transmission periods in an information indication method according to an embodiment of the present disclosure.
FIG. 5 is a diagram illustratinga time range corresponding to time information including multiple TWT intervals in an information indication method according to an embodiment of the present disclosure.
FIG. 6 is a diagram illustrating a time range corresponding to time information including a length of an RAW in an information indication method according to an embodiment of the present disclosure.
FIG. 7 is the first diagram illustrating a time range corresponding to time information including a maximum SP length in an information indication method according to an embodiment of the present disclosure.
FIG. 8 is the second diagram illustrating a time range corresponding to time information including a maximum SP length in an information indication method according to an embodiment of the present disclosure.
FIG. 9 is a structural diagram of a terminal device 900 according to an embodiment of the present disclosure.
FIG. 10 is a structural diagram of a terminal device 1000 according to an embodiment of the present disclosure.
FIG. 11 is a structural diagram of a network device 1100 according to an embodiment of the present disclosure.
FIG. 12 is a structural diagram of a network device 1200 according to an embodiment of the present disclosure.
FIG. 13 is a schematic structural diagram of a communication device 1300 according to an embodiment of the present disclosure.
FIG. 14 is a schematic structural diagram of a chip 1400 according to an embodiment of the present disclosure.

### DETAILED DESCRIPTION

The technical solutions in the embodiments of the present disclosure will be described below in conjunction with the drawings in the embodiments of the present disclosure.

It should be noted that the terms "first", "second", etc. in the description and claims of the embodiments of the present disclosure and the above-mentioned drawings are used to distinguish similar objects, and are not necessarily used to describe a specific order or sequence. The objects described as "first" and "second" described at the same time may be the same or different.

The technical solutions in the embodiments of the present disclosure may be applied to various communication systems, such as, a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi) system and a 5h-generation (5G) communication system or other communication systems, a wireless fidelity (WiFi) system or other communication systems.

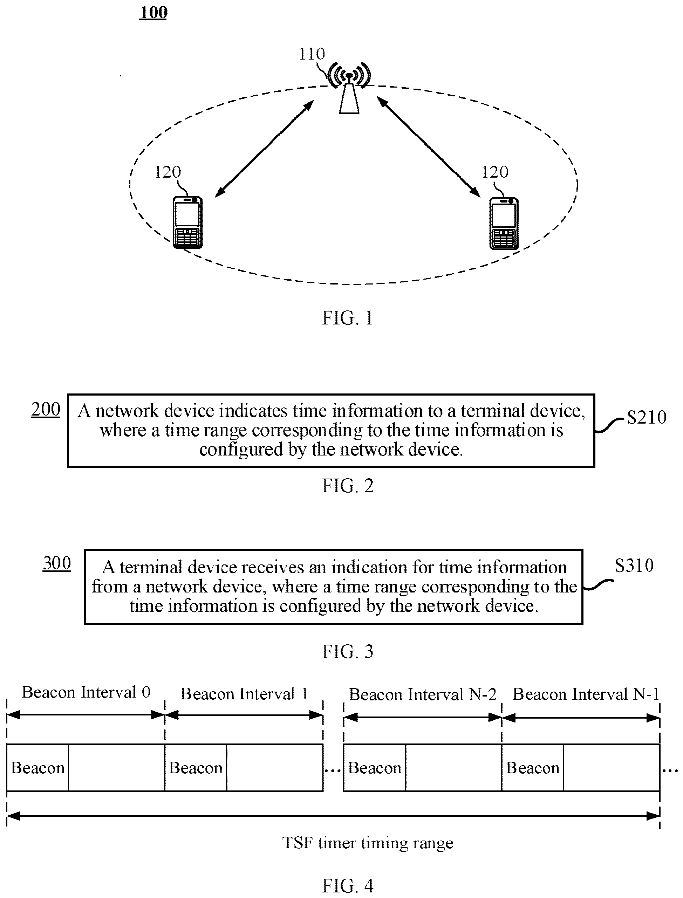

FIG. 1 exemplarily illustrates a communication system 100. The communication system 100 may include an access point (AP) 110 and a station (STA) 120 accessing to a network through the access point 110.

In some scenarios, an AP is also called an AP STA, that is, in a sense, an AP is also an STA.

In some scenarios, an STA is also called a non-AP STA.

The communication in the communication system 100 may be communication between the AP and the non-AP STA, communication between the non-AP STA and the non-AP STA, or communication between the STA and a peer STA, where the peer STA may refer to a device that communicates with the STA peer, for example, the peer STA may be the AP or the non-AP STA.

The AP is equivalent to a bridge connecting a wired network and a wireless network. The main function of the AP is to connect various wireless network clients together and then connect the wireless network to Ethernet. An AP device may be a terminal device (such as a mobile phone) or network device (such as a router) with a WiFi chip.

It should be understood that the role of the STA in the communication system is not absolute. For example, in some scenarios, when the mobile phone is connected to the router, the mobile phone is the non-AP STA. When the mobile phone serves as a hotspot for other mobile phones, the mobile phone plays the role of the AP.

The AP and non-AP STA may be device applied in the internet of vehicles, an IoT node or a sensor in the IoT, a smart camera, a smart remote controller, a smart water and electricity meter in a smart home, and a sensor in smart city.

In some embodiments, the non-AP STA may support a 802.11be. The standard. The non-AP STA may further support various current and future 802.11 family wireless local area networks (WLAN) standards such as a 802.11ax, a 802.11ac, a 802.11n, a 802.11g, a 802.11b and a 802.11a.

In some embodiments, the AP may be a device supporting a 802.11be standard. The AP may also be the device that supports various current and future 802.11 family WLAN standards, such as a 802.11ax, a 802.11ac, a 802.11n, a 802.11g, a 802.11b, and a 802.11a.

In the embodiment of the present disclosure, the STA may be a mobile phone, a pad, a computer, a virtual reality (VR) device, an augmented reality (AR) device, a wireless device in industrial control, a set-top box, a wireless device of self-driving, an in-vehicle communication device, a wireless device in remote medical, a wireless device in a smart grid, a wireless device in transportation safety, a wireless device in smart city, or a wireless device in smart home, a wireless communication chip/application specific integrated circuit (ASIC) /system-on-a-chip (SOC), a zero power device, an ambient powered IoT device, etc. that supports WLAN/WiFi technology.

The frequency bands supported by the WLAN technology may include but are not limited to: low frequency bands (such as 2.4 GHz, 5 GHz, and 6 GHz) and high frequency bands (such as 60 GHz).

FIG. 1 exemplarily illustrates one AP STA and two non-AP STAs. Optionally, the communication system 100 may include multiple AP STAs and other numbers of non-AP STAs, which is not limited in the embodiments of the present disclosure.

It should be understood that the terms "system" and "network" are often used interchangeably herein. The term "and/or" herein is only an association relationship to describe associated objects, which indicates that there may be three kinds of relationships. For example, A and/or B may indicate three cases where: A exists alone, both A and B exist, and B exists alone. Moreover, the character "/" herein generally indicates that related objects before and after the character "/" are in an "or" relationship.

It shall be understood that "indicate/indicating/indicated" in the embodiments of the present disclosure may be a direct indication, may be an indirect indication, or may further represent an association relationship. For example, A indicating B may mean that A directly indicates B, for example, B may be obtained by A. Alternatively, A indicating B may further mean that A indirectly indicates B, for example, A indicates C, and B may be obtained through C. Alternatively, A indicating B may further mean that there is an association relationship between A and B.

In the description of the embodiments of the present disclosure, the term "correspond/corresponding/correspondence" may mean that there is a direct correspondence or indirect correspondence between two elements. Alternatively, "correspond/corresponding/correspondence" may indicate an association relationship between two elements. Alternatively, "correspond/corresponding/correspondence" may indicate a relationship of indicating and being indicated, configuring and being configured, etc.

To facilitate the understanding of the technical solutions in the embodiments of the present disclosure, the related technologies in the embodiments of the present disclosure are described below. The following related technologies may be arbitrarily combined with the technical solutions in the embodiments of the present disclosure as optional solutions, and they all belong to the protection scope of the embodiments of the present disclosure.

### 1. Cellular passive internet of things

With the increase of 5G industry applications, the variety of connected objects and their use-cases continue to expand, leading to higher demands on the price and power consumption of communication terminals. The application of battery-free, low-cost passive IoT devices has become a key technology for the cellular IoT, enriching the types and quantities of 5G network-connected terminals and truly realizing the Internet of Everything. The passive IoT devices may be based on existing zero power technologies, such as Radio Frequency Identification (RFID) technology, and extended based on this to suit cellular IoT applications.

### 2. Classification of the zero power terminals

Based on the energy source and usage of the zero power terminals, zero power terminals may be divided into the following types.

### 1) Passive zero power terminal

The zero power terminal does not need an internal battery. When the zero power terminal approaches the network device (such as a reader/writer of an RFID system), the zero power terminal is within the near field formed by the antenna radiation of the network device. Therefore, the antenna of the zero power terminal generates an induced current through electromagnetic induction, and the induced current drives the low-power chip circuit of the zero power terminal. This enables the demodulation of the forward link signal and the modulation of the backward link signal. For a backscatter link, the zero power terminal uses an implementation method of backscattering to transmit the signal.

It may be seen that the passive zero power terminal does not require an internal battery to drive either the forward link or the backward link, making it a truly zero power terminal.

The passive zero power terminal does not require a battery, and an RF circuit and a baseband circuit are very simple. For example, they do not require a low-noise power amplifier (LNA), a power amplifier (PA), a crystal oscillator, an analog-to-digital converter (ADC) and other devices. Therefore, they have many advantages such as small size, light weight, very low price and long service life.

### 2) Semi-passive zero power terminal

The semi-passive zero power terminal itself does not install a conventional battery, but may use an energy harvesting module to harvest the ambient power, such as wireless radio frequency signal energy, and store the harvested energy in an energy storage unit (such as a capacitor). Once the energy storage unit has obtained energy, it may power the low-power chip circuit of the zero power terminal, enabling tasks such as demodulating forward link signals and modulating backward link signals. For the backscatter link, the zero power terminal may use a backscatter manner or an active transmission manner to transmit signals.

It may be seen that the semi-passive zero power terminal does not require the internal battery to drive either the forward link or the backward link. Although the energy stored in a capacitor is used during operation, the energy comes from the ambient power harvested by the energy harvesting module. Therefore, it is also the true zero power terminal.

The semi-passive zero power terminal inherits many advantages of the passive zero power terminal, and therefore have many advantages such as small size, light weight, very cheap price and long service life.

### 3) Active zero power terminal

The zero power terminal used in some scenarios may also be the active zero power terminal, which may equipped with the internal battery. The battery is used to power the low-power chip circuit of the zero power terminal, enabling tasks such as demodulating forward link signals and modulating backward link signals. However, for the backscatter link, the zero power terminal uses the backscatter or the active transmission to transmit signals. Although they have the internal battery, these active zero power terminals have extremely low power consumption and complexity, so it may have a smaller capacity battery, thereby achieving lower costs and smaller size. The internal battery may also be used as the energy storage unit for the energy harvesting module to store the harvested ambient power, thereby achieving a longer maintenance period or even maintenance-free.

The active zero power terminal is powered by the internal battery to increase the communication distance of the zero power terminal and improve communication reliability. Therefore, it may be applied in some scenarios with relatively high requirements on communication distance, reading latency, etc.

### 3. Cellular passive internet of things

As 5G industry applications increase, the types of connected objects and application scenarios will increase, and there will be higher requirements on the price and power consumption of the communication terminals. The application of battery-free, low-cost passive IoT devices has become a key technology for cellular IoT, enriching the types and quantities of terminals connected to 5G network and truly realizing the Internet of Everything. The passive IoT devices may be based on existing zero power devices and extended based on this to suit the cellular IoT.

### 4. Ambient powered device

In NR systems and WiFi systems, the battery-free and low-cost nature of devices may support a low-cost, large-scale deployment and maintenance-free of IoT devices. Currently, the standard is studying how to support ambient powered IoT devices, called ambient IoT (AMP IoT) devices, in NR systems and WiFi systems. The energy required for operation from ambient power harvesting, and sources of the ambient power include wireless signals, solar energy, thermal energy, etc. This type of devices is similar to the passive or semi-passive devices in zero power communications.

The ambient IoT device may be roughly divided into the following three types, each with its own level of complexity and communication capabilities:
(1) Device A: it does not have an energy storage capability and may not transmit signals independently, that is, it uses a transmission manner of backscattering;
(2) Device B: it has the energy storage capability but may not transmit the signals independently, that is, it uses a transmission manner of backscattering and may use the stored energy to amplify the backscattered signal; and
(3) Device C: it has the energy storage capability and is capable of transmitting the signals independently, that is, it has active transmission capability.

Device A has the lowest complexity and power consumption which may be as low as 1 µW, but its communication range is limited, which is generally only a few meters. Device A requires a network device to provide a carrier signal for backscattering transmission. Device C generally has a large-capacity capacitor to store energy from the ambient. Its power consumption may support several hundred µWs, and it may support active signal transmission and has a longer communication distance. Since Device C may transmit actively, it does not need the network device to provide a carrier signal. The complexity and power consumption of Device B fall between those of Device A and Device C.

In addition, the zero power terminals may also support various types of the ambient power harvesting, such as wireless radio frequency, solar energy, thermal energy, mechanical energy, and other energy. Among them, the zero power terminals based on wireless RF energy harvesting may require the network to provide a wireless RF power supply signal.

Based on the discussion of Ambient IoT application scenarios based on related technologies, Ambient IoT may be used in at least the following four types of scenarios:
object recognition, such as logistics, production line product management, supply chain management;
environmental monitoring, such as temperature, humidity, and harmful gas monitoring in the operation environment and natural environment;
positioning, such as indoor positioning, intelligent object searching, production line item positioning, etc.; and
intelligent control, such as intelligent control of various electrical appliances in smart homes (turning air conditioners on and off, adjusting temperature), and intelligent control of various facilities in agricultural greenhouses (automatic irrigation and fertilization).

### 5. Time synchronization mechanism in a WiFi system

In a WiFi system, in addition to the internal timing of a station, every station in a basic service set must maintain a timer, such as a timer of timing synchronization function (TSF). The TSF timer is an internal timer that has been synchronized with the TSF of all other stations (STA) in the basic service set. The TSF timer performs time counting in units of microseconds. In order to synchronize the time of every stations in the basic service set, the access point (AP) indicates the number of microseconds that have passed since the network started operating in a timestamp field in a beacon frame. The timestamp field consists of 8 bytes, i.e., 64 bits, and the stations in the basic service set adjust local timers based on the timestamp.

The AMP IoT device operates based on the harvesting of the ambient power, such as wireless radio frequency energy, the solar energy, the thermal energy, the mechanical energy, etc. The stability of the ambient power harvesting is a challenge to ensure the reliability of communications. For the time synchronization, the AMP IoT device needs to receive timestamp information and maintain a local TSF timer. This requires the AMP IoT device to have a stable power source to support continuous operation. In fact, the operation of the AMP IoT device depends on the harvesting results and storage status of the ambient power. After some communication processes, the energy storage of the AMP IoT device may not support continued operation, or an energy harvesting is required to obtain energy to support the next communication process. During the energy harvesting process, the AMP IoT device may not be able to reliably receive the timestamp information, update the local TSF timer, etc., causing the AMP IoT device to lose time synchronization with the network. After losing time synchronization with the network, when the AMP IoT device has enough energy to operate again, it may not know the target transmission time of the beacon frame and may not resynchronize with the network in time. At the same time, receiving 64-bit timestamp information itself will cause the zero power device to consume power, which is not conducive to energy saving.

In the embodiments of the present disclosure, the device involved includes the terminal device and the network device. The terminal device may be the zero power device, which may include the ambient powered device, such as the ambient powered IoT (AMP IoT) device, and the communication device that may be used in the WiFi or cellular networks. The ambient power may include the wireless radio frequency energy, the solar energy, the thermal energy, the mechanical energy, etc. From the perspective of energy harvesting, the zero power device may also be the energy harvesting device. The network device is a device that communicates with the terminal device, such as a device that communicates with the zero power device. The network device may also be a device that provides wireless power for the zero power device, such as an AP in WiFi or a base station in the cellular network.

The embodiment of the present disclosure provides a time information indication method, the main method is that a network device indicates time information to a terminal device, and the time information may be set to simplified timestamp information, that is, the timestamp information with a shorter time range. The embodiments of the present disclosure may be applied to WiFi systems, cellular network systems, etc.

FIG. 2 is a schematic flowchart of an information indication method 200 according to an embodiment of the present disclosure. The method may be applied to the system illustrated in FIG. 1, but is not limited thereto. The method includes at least part of the following.

In S210, a network device indicates time information to a terminal device. A time range corresponding to the time information is configured by the network device.

The time information may include timestamp information.

Since the time range corresponding to the time information indicated by the network device may be configured by the network device, for the zero power device, since the operating time of the zero power device is intermittent due to energy harvesting, it is meaningless to maintain synchronization within a long time range. Therefore, a time range corresponding to the timestamp information transmitted from the network device may be shortened, that is, the network device may be configured with the time information with a shorter time range, thereby reducing the power consumption of the terminal device when receiving the time information, while meeting the time synchronization requirements of the terminal device during the operating hours and reducing the redundancy of existing timers.

Furthermore, in some implementations, the time information indicated by the network device may be carried in other types of frames besides the beacon frame, such as a management frame, a control frame, a data frame, etc. Specifically, the time information may be carried in the beacon frame, a synchronization frame, a trigger frame, a data frame, a paging frame, and the like. Accordingly, the terminal device may obtain the timestamp information through the beacon frame, and may also obtain the timestamp information through frames other than the beacon frame, so that the terminal device may obtain the timestamp information in a timely manner and avoid the waiting time of obtaining the timestamp information only through the beacon frame.

It may be seen that the use of the embodiments of the present disclosure may reduce the power consumption of the terminal device when receiving the timestamp information, and may enable the terminal device to obtain the timestamp information in the timely manner and reduce the waiting time of the terminal device. Therefore, the embodiments of the present disclosure are particularly suitable for the zero power terminal.

In some implementations, the network device may predetermine a time range corresponding to the time range and notify the terminal device. For example:
receiving, by the network device, type and/or capability information of the terminal device;
determining, by the network device, according to the type and/or capability information, the time range corresponding to the time information; and
transmitting, by the network device, the time range corresponding to the time information to the terminal device.

The type and/or capability information of the terminal device may include at least one of: an energy storage capability, an energy harvesting capability or an energy harvesting mode. These types and/or capabilities may determine how long the terminal device may continue to operate at once.

For example, during the association process, the network device receivesan association request message from the terminal device, and the association request message carries the type and/or capability information of the terminal device; the network device determines, according to the type and/or capability information of the terminal device, the time range of the time information indicated to the terminal device; finally, the network device transmits an association response message to the terminal device, and the association response message carries the time range corresponding to the time information.

Alternatively, the network device may receive the type and/or capability information of multiple terminal devices, and according to the types and/or capability information of these terminal devices, the network device uniformly determines a time range corresponding to time information, and broadcast the time range corresponding to the time information to these terminal devices. When determining the time range, the network device may determine the time range based on the terminal device with the strongest capability among the terminal devices, so that the time range meets the timing requirement of each terminal device.

In some implementations, the time range corresponding to the time information may be a time range that is unrelated to an existing time period. For example, the network device configures the time range corresponding to the time information to be 100 milliseconds.

In other implementations, the time range corresponding to the time information may be a time range associated with a time period in the related art. For example, the network device configures the time range corresponding to the time information to include at least one first time period, such as 1, 2 or more first time periods. The specific type of the first time period and the number of first time periods included in the time range may be determined by the network device according to the type and/or capabilities of the terminal device.

The first time period may be:
(1) a beacon frame transmission interval (period);
(2) a TWT interval;
(3) a length of an RAW; and
(4) an SP length.

The following is a detailed introduction.
(1) The time range corresponding to the time information includes at least one beacon frame transmission interval.

The beacon frame transmission interval may refer to a interval between target beacon transmission times (TBTT) of beacon frames, that is, a beacon interval. The network device transmits the time information to the terminal device. The time range corresponding to the time information may be an integer multiple (such as 1, 2 or multiple times) of the beacon frame transmission interval. The unit of the time information may include a time unit (TU), a microsecond, or a millisecond. Among them, the TU may be equal to 1024 microseconds.

The network device may use the beacon frame, or other frames except the beacon frame, to carry or indicate the time information.

In a case where the time range corresponding to the time information is 1 beacon interval, if the beacon frame is transmitted at a starting position of the beacon interval in which the beacon frame is located, the network device may indicate the time information in an implicit manner. That is to say, the network device does not need to carry the bits of the time information, but may transmit the beacon frame at the starting position of the beacon interval (which is a starting position of the time range corresponding to the time information) to implicitly indicate that the time information is "time 0"; when the terminal device receives the beacon frame, it may know that the time information is "time 0".

That is, in a case where the time range corresponding to the time information includes the beacon frame transmission interval, indicating, by the network device, the time information to the terminal device may include: transmitting, by the network device, a beacon frame to the terminal device, where the beacon frame is located at a starting position of the beacon frame transmission interval.

In a case where the time range corresponding to the time information is 2 or more beacon intervals, if a beacon frame is transmitted at a starting position of the beacon interval in which the beacon frame is located, the network device may not carry specific time information, but instead indicate in the beacon frame which beacon interval that the beacon frame is located in, to implicitly indicate that the time information is the starting position of the beacon interval. Accordingly, the terminal device that receives the beacon frame may determine the time information indicated by the network device according to which beacon interval that the beacon frame is located in and a length of the pre-configured beacon interval. For example, if the length of the pre-configured beacon interval is 102,400 microseconds, and the time range corresponding to the time information includes four beacon intervals (that is, a length is four times of 102,400 microseconds, i.e., 409,600 microseconds), the network device transmits a beacon frame at an initial position of the second beacon interval, and beacon frame indicates that the beacon interval which it is located in is the second beacon interval whithin the entire time range; then, after receiving the beacon frame, the terminal device may determine that the time information indicated by the beacon frame corresponds to a starting position of the second beacon interval. If starting time of the entire time range is defined as the Oth microsecond, the time information corresponds to the 102,400th microsecond.

That is, in a case where the time range corresponding to the time information includes two or more beacon frame transmission intervals, indicating, by the network device, the time information to the terminal device may include: transmitting, by the network device, at least one beacon frame to the terminal device, where the beacon frame is located at a starting position of a beacon frame transmission interval, the beacon frame carries or indicates the time information, and the time information indicates a position of the beacon frame transmission interval in which the beacon frame is located within the time range corresponding to the time information.

If the time information is not indicated by the beacon frame, or the beacon frame is not transmitted at a starting position of the beacon interval, specific time information may be carried. For example, if the time information is 102,400 microseconds, the time information may be indicated by using 3 bytes or 17 bits.

(2) The time range corresponding to the time information includes at least one TWT interval.

Taking the WiFi system as an example, the AP and the STA may establishe a timetable between them, and the timetable consists of at least one target wake time (TWT) interval. The network device transmits time information to the terminal device, and the time range corresponding to the time information may be the integer multiple (such as 1 time, 2 times or multiple times) of the TWT interval. The unit of the time information may include a time unit such as a microsecond or a millisecond.

The network device may use the beacon frame, or other frames except the beacon frame, to carry or indicate the time information.

If the network device uses a TWT trigger frame to carry or indicate the time information. In a case where the time range corresponding to the time information is one TWT interval, if the TWT trigger frame is transmitted at a starting position of a TWT interval in which the TWT trigger frame is located, the network device may indicate the time information in an implicit manner. That is to say, the network device does not need to carry bits of the time information, but instead transmits a TWT trigger frame at the starting position of the TWT interval (that is, a starting position of the time range corresponding to the time information) to implicitly indicate that the time information is "time 0"; when the terminal device receives the TWT trigger frame, it may determine that the time information is "time 0".

That is, in a case where the time range corresponding to the time information includes the TWT interval, indicating, by the network device, the time information to the terminal device, may include: transmitting, by the network device, a TWT trigger frame to the terminal device. The TWT trigger frame is located at a starting position of the TWT interval.

In a case where the time range corresponding to the time information is 2 or more TWT intervals, if a TWT trigger frame is transmitted at a starting position of the TWT interval in which the TWT trigger frame is located, the network device may not carry the specific time information, but instead indicate in the TWT trigger frame which TWT interval the TWT trigger frame is located in, thereby implicitly indicating that the time information is the starting position of the TWT interval. Accordingly, the terminal device that receives the TWT trigger frame may determine the time information indicated by the network device based on which TWT interval the TWT trigger frame is located in and a length of the pre-configured TWT interval. For example, the length of the pre-configured TWT interval is 102,400 microseconds. If the time range corresponding to the time information includes 3 TWT intervals (that is, the length is 3 times of 102,400 microseconds, i.e., 307,200 microseconds), the network device transmits the TWT trigger frame at an initial position of the third TWT interval, and indicates in the TWT trigger frame that the TWT interval the TWT trigger frame is located in is the third TWT interval in the entire time range; then, after receiving the TWT trigger frame, the terminal device may determine that the time information indicated by the frame corresponds to a starting position of the third TWT interval. If a starting time of the entire time range is taken as the 0th microsecond, the time information is the 204,800th microsecond.

That is, in a case where the time range corresponding to the time information includes two or more TWT intervals, indicating, by the network device, the time information to the terminal device may include: transmitting, by the network device, at least one TWT trigger frame to the terminal device, where the TWT trigger frame is located at a starting position of the TWT interval, the TWT trigger frame carries or indicates time information, and the time information indicates a position of the TWT interval in which the TWT trigger frame is located within the time range corresponding to the time information.

(3) The time range corresponding to the time information includes the length of at least one RAW.

In order to reduce channel access conflicts, a restricted access window (RAW) is introduced in the related art. Each RAW only allows a part of STAs to access to and use the channel for transmission. Each RAW may be divided into one or more RAW slots. The STA accesses to the channel in the allocated RAW slot and does not access to the channel in other RAW slots, thereby reducing the channel access conflicts.

In the embodiment of the present disclosure, the time range corresponding to the time information may include an integer multiple (such as 1 time) of the length of the RAW, such as the time range corresponding to the timestamp information is the length of the RAW.

The network device may use the beacon frame, or other frames except the beacon frame, to carry or indicate the time information.

If the network device uses a synchronization frame to carry or indicate the time information.

In some implementations, if the synchronization frame is transmitted at a starting position of the RAW, the network device may indicate the time information in the implicit manner. That is to say, the network device does not need to carry bits of the time information, but instead transmits the synchronization frame at the starting position of the RAW (that is, a starting position of the time range corresponding to the time information) to implicitly indicate that the time information is "time 0". When the terminal device receives the synchronization frame, it may know that the time information is "time 0".

That is, in a case where the time range corresponding to the time information includes the length of an RAW, indicating, by the network device, the time information to the terminal device may include: transmitting, by the network device, a synchronization frame to the terminal device, where the synchronization frame is located at a starting position of the RAW.

In other implementations, if the synchronization frame is transmitted at a starting position of an RAW slot within the RAW, the network device may not carry the specific time information, but instead indicates in the synchronization frame which RAW slot that the synchronization frame is located in, thereby implicitly indicating that the time information is the starting position of the RAW slot. Accordingly, the terminal device that receives the synchronization frame may determine the time information indicated by the network device according to which RAW slot thatthe synchronization frame is located in and a length of the pre-configured RAW. For example, the length of the pre-configured RAW is 80,000 microseconds. If the RAW contains 4 RAW slots, the network device transmits the synchronization frame at an initial position of the third RAW slot, and indicates in the synchronization frame that the RAW slot is the third RAW slot in the RAW range; then, after receiving the synchronization frame, the terminal device may determine that the time information indicated by the synchronization frame is a starting position of the third RAW slot. If a starting time of the entire time range is taken as the Oth microsecond, the time information is the 40,000th microsecond.

That is, in a case where the time range corresponding to the time information includes the length of an RAW, indicating, by the network device, the time information to the terminal device may include: transmitting, by the network device, at least one synchronization frame to the terminal device, where the synchronization frame is located at a starting position of a slot within the RAW. The synchronization frame carries or indicates the time information, and the time information indicates a position of the slot in which the synchronization frame is located within the RAW.

(4) The time range corresponding to the time information includes the length of the SP.

Automatic power save delivery (APSD) is a power saving authentication protocol that may extend the battery life of WiFi devices. A concept of service period (SP) is set therein. If a node occupies a channel, it sets a service period, and during this period, the node may transmit multiple frames. In other words, it may transmit multiple frames in one competition. In the ASPD, there are two specific operating modes: scheduled APSD (S-APSD) and unscheduled APSD (U-APSD).

In the U-APSD mode, the STA initiates a transmission process and first transmits a trigger frame. Through this frame, the STA starts a service period, namely, service period start. The AP then responds with an ACK frame and a data frame. Then, within a service period range, the STA will continue to exchange data with the AP. When all the buffers in the AP are transmitted, end of service period (EOSP) will be marked in the last data frame, and thus ending the service period, i.e., Service Period End. At the same time, there is also a negotiated maximum SP length between the STA and the AP, namely, Max SP Length.

In the S-APSD mode, the SP is pre-scheduled. When the scheduled time is about to arrive, the AP will transmit a trigger frame, and the STA will also wake up in advance to receive this frame, and thus starting a service period.

In the embodiment of the present disclosure, the time range corresponding to the time information includes a length of the SP, such as a length of the maximum SP.

During the SP duration, the time information may be carried in the data frame transmitted from the AP for the time synchronization of the STA in the SP duration. In addition to the data frame, the network device may also use the beacon frame, or other frames except the beacon frame, to carry or indicate the time information.

(5) The time range corresponding to the time information is the configured length, which is independent of the existing time period.

In an embodiment of the present disclosure, the terminal device may use the beacon frame, or other frames except the beacon frame, to carry or indicate the time information.

The embodiment of the present disclosure also provides a time information indication method , the main method is that the terminal device receives an indication for time information from a network device, and the time range corresponding to the time information is configured by the network device. The time information may be set as simplified timestamp information, that is, timestamp information with a shorter time range. The embodiments of the present disclosure may be applied to the WiFi systems, the cellular network systems, etc.

FIG. 3 is a schematic flowchart of an information indication method 300 according to the embodiment of the present disclosure. The method may be applied to the system illustrated in FIG. 1, but is not limited thereto. The method includes at least part of the following.

In S210, the terminal device receives the indication for the time information from a network device, where the time range corresponding to the time information is configured by the network device.

The time information may include timestamp information.

Afterwards, the terminal device may adjust a timer according to the indication for the time information, for example, adjust a TSF timer.

Since the time range corresponding to the time information indicated by the network device may be configured by the network device, for the zero power device, since the operating time of the zero power device is intermittent due to energy harvesting, it is meaningless to maintain synchronization within a long time range. Therefore, the time range corresponding to the timestamp information transmitted from the network device may be reduced, that is, the network device may be configured with the time information with a shorter time range, thereby reducing the power consumption of the terminal device when receiving the time information, while meeting the time synchronization requirements of the terminal device during the operating hours and reducing the redundancy of existing timers.

Furthermore, in some implementations, the time information indicated by the network device may be carried in other types of frames besides the beacon frame, such as a management frame, a control frame, a data frame, etc. Specifically, the time information may be carried in the beacon frame, a synchronization frame, a trigger frame, a data frame, a paging frame, and the like. Accordingly, the terminal device may obtain the timestamp information through the beacon frame, and may also obtain the timestamp information through the frames other than the beacon frame, so that the terminal device may obtain the timestamp information in a timely manner and avoid the waiting time of obtaining the timestamp information only through the beacon frame.

It may be seen that the use of the embodiments of the present disclosure may reduce the power consumption of the terminal device when receiving the timestamp information, and may enable the terminal device to obtain the timestamp information in the timely manner and reduce the waiting time of the terminal device. Therefore, the embodiments of the present disclosure are particularly suitable for the zero power terminal.

In some implementations, the terminal device may report its own type and/or capability information to the network device in advance, so that the network device may determine the time range corresponding to the time information according to the type and/or capability information. For example:
transmitting, by the terminal device, the type and/or capability information of the terminal device; and
receiving, by the terminal device, the time range corresponding to the time information.

The type and/or capability information of the terminal device may include at least one of: an energy storage capability, an energy harvesting capability or an energy harvesting mode. These types and/or capabilities may determine how long the terminal device may continue to operate at once.

For example, during the association process, the terminal device transmits an association request message to the network device, and the association request message carries the type and/or capability information of the terminal device; the network device determines, according to the type and/or capability information of the terminal device, the time range of the time information indicated to the terminal device; finally, the terminal device receives an association response message from the network device, and the association response message carries the time range corresponding to the time information.

Alternatively, the network device may receive the type and/or capability information of multiple terminal devices, and according to the type and/or capability information of these terminal devices, the network device uniformly determines a time range corresponding to time information, and broadcast the time range corresponding to the time information to these terminal devices. When determining the time range, the network device may determine the time range based on the terminal device with the strongest capability among the terminal devices, so that the time range meets the timing requirement of each terminal device.

In some implementations, the time range corresponding to the time information may be a time range that is unrelated to an existing time period. For example, the network device configures the time range corresponding to the time information to be 100 milliseconds.

In other implementations, the time range corresponding to the time information may be a time range associated with a time period in the related art. For example, the network device configures the time range corresponding to the time information to include at least one first time period, such as 1, 2 or more first time periods. The specific type of the first time period and the number of first time periods included in the time range may be determined by the network device according to the type and/or capabilities of the terminal device.

The first time period may be:
(1) a beacon frame transmission interval;
(2) a TWT interval;
(3) a length of an RAW; and
(4) an SP length.

For various examples of the time range corresponding to the time information, please refer to the aforementioned related content and repetition will not be made here.

Several implementations of the present disclosure are described in detail below in conjunction with the accompanying drawings.

The embodiment of the present disclosure provides a time information indication method, where the network device indicates simplified timestamp information. Taking the WiFi system as an example, the method includes the following manners. The network device may use any one or more of the following manners to indicate the timestamp information to the terminal device.

Manner 1: the time range corresponding to the timestamp information is an integer multiple of the beacon frame transmission interval.

In the prior art, a timestamp field in a beacon frame includes 8 bytes, i.e., 64 bits, and may be used to perform, in units of microseconds, time counting in a range of 264 microseconds, which is approximately 580,000 years. However, this timing range is too long for the zero power device. The zero power device generally may not guarantee continuous long-term operation. When the zero power device is out of power, the zero power device may not receive the timestamp information and maintain a local TSF timer. At the same time, receiving 64-bit timestamp information itself will enable the zero power device to consume power, which is not conducive to energy saving.

In this method, the timestamp information is simplified. If operating time of the zero power device is intermittent due to energy harvesting, it is meaningless to maintain synchronization within a long time range. Therefore, in this method, a time range corresponding to the timestamp information transmitted from the network device is shortened.

Specifically, the time range corresponding to the timestamp information may be the beacon frame transmission interval, i.e., the beacon interval. In the prior art, a interval between target beacon transmission times (TBTT) of the beacon frames is called beacon interval. Beacon interval information is carried by the beacon frame. The beacon interval information uses 2 bytes to indicate the number of time units (TUs), where one TU represents 1,024 microseconds. For example, if the beacon interval is set to 100 TUs, it is equivalent to transmitting a beacon signal every 100 milliseconds, or 0.1 seconds.

Specifically, the number of bits corresponding to the timestamp information corresponds to the length of the beacon interval. A time unit indicated by the timestamp information is TU. For example, a length of the beacon interval is 100 TUs, and the timestamp information may be set to 1 byte, i.e., 8 bits, which may indicate the number of TUs in the beacon interval, and may indicate a range of 0 to 255 TUs. The timestamp information may be set to 7 bits in units of bits. The time unit indicated by the timestamp information may also be microseconds, so the time length that the timestamp information may indicate is 102,400 microseconds. The timestamp information may require 3 bytes in units of bytes and 17 bits in units of bits. In a case where the time range corresponding to the timestamp information is a beacon interval, assuming that a beacon frame is located at a starting position of the beacon interval, the timestamp information may be implicitly indicated. In this case, the beacon frame may not include the timestamp information. Assuming that the timestamp information is carried or indicated in a frame (such as a beacon frame or other types of frames) transmitted from the AP at other times in the beacon interval, the time information within a range of a beacon interval may be specifically indicated.

Furthermore, the time range corresponding to the timestamp information may be an integer multiple of the beacon interval. As illustrated in FIG. 4, a timing range of the TSF timer is N beacon intervals. In this case, assuming that the beacon frame is located at a starting position of the beacon interval, the timestamp information carried or indicated in each beacon frame may indicate which beacon interval among the N beacon intervals that the beacon frame is located in. The timestamp information carried or indicated in a frame (such as a beacon frame or other types of frames) transmitted at other times may specifically indicate the time information within a range of the N beacon intervals.

Manner 2: the time range corresponding to the timestamp information is an integer multiple of the TWT interval.

The target wake time (TWT) has been introduced in the related art. In the TWT, a timetable is established between the terminal and the AP (the timetable is agreed upon by the terminal and the AP), and the timetable consists of TWT time periods. In a case where a time period negotiated between the terminal and the AP arrives, the terminal wakes up and waits for the trigger frame transmitted from the AP to exchange data. When the transmission is completed, it returns to a sleep mode. Each terminal and the AP will perform independent negotiations, and each terminal has a separate TWT time period. The AP may also group the terminals according to the set TWT time period and connect to multiple terminals at once, thereby improving energy saving efficiency.

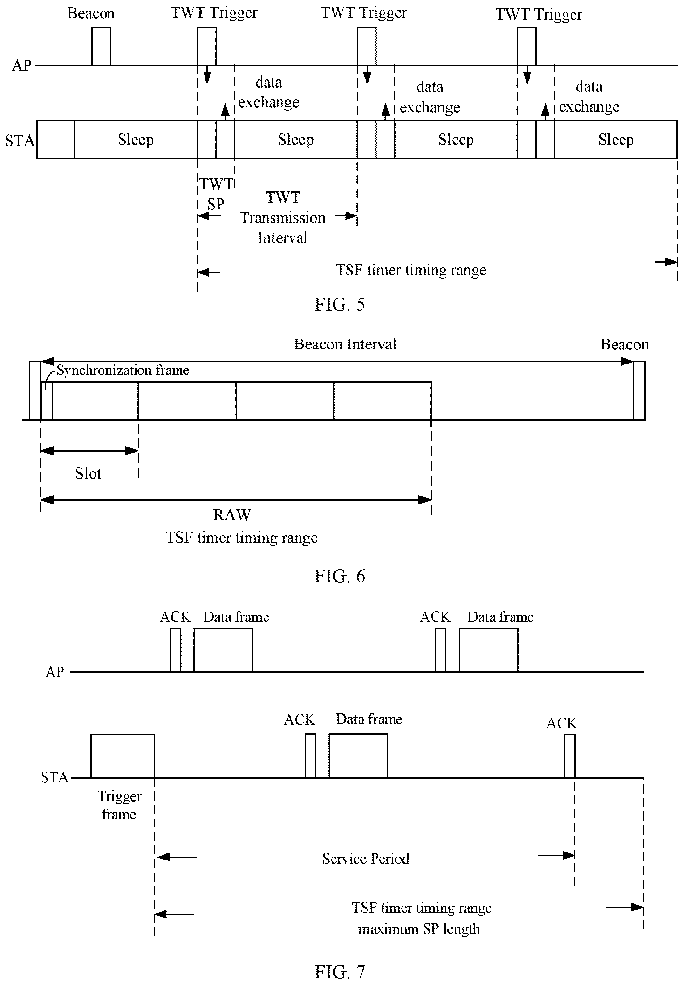

As illustrated in FIG. 5, in a TWT mode, the STA and the AP agree on the TWT time period. The STA operates in a sleep mode by default to maintain the low power consumption. When the TWT time period arrives, the AP transmits a trigger frame to the terminal, the terminal wakes up and exchanges data with the AP. After the data exchange is completed, the terminal returns to the sleep mode. The time period during which the STA wakes up to exchange data each time the TWT arrives is called a TWT interval (TWT SP, TWT service period).

In this method, the time range corresponding to the timestamp information may be the TWT interval. Specifically, the time range corresponding to the timestamp information may be one or more TWT intervals. In a case where the time range corresponding to the timestamp information is a TWT interval, if the TWT trigger frame is located at a starting position of the TWT interval, the timestamp information may be implicitly indicated. In this case, the TWT trigger frame may not contain the timestamp information. If the AP includes the timestamp information in a frame (such as a TWT trigger frame or other types of frames)transmitted at other times in the TWT interval, it can specifically indicate the time information within the TWT interval. In a case where the time range corresponding to the timestamp information is multiple TWT intervals, if the TWT trigger frame is transmitted at a starting position of each TWT interval, the TWT trigger frame may indicate which TWT interval among the N TWT intervals that the TWT trigger frame is located in.

Manner 3: the time range corresponding to the timestamp information is an integer multiple of the length of an RAW.

In order to reduce channel access conflicts, a restricted access window (RAW) is introduced in the related art. Each RAW only allows a part of STAs to access to and use the channel for transmission. Each RAW may be divided into one or more RAW slots. The STA accesses to the channel in the allocated RAW slot and does not access to the channel in other RAW slots, thereby reducing the channel access conflicts. As illustrated in FIG. 6, the RAW contains 4 slots, and the STA transmits data in a slot belongs to the STA itself.

In this manner, the time range corresponding to the timestamp information is the integer multiple of the length of the RAW. For example, the time range corresponding to the timestamp information is the length of the RAW. At a starting position of RAW, a synchronization frame may be used to carry the timestamp information to indicate the starting time of RAW. After obtaining the timestamp information, the STA updates a local TSF to synchronize with the AP and other STAs in time within the RAW range and correctly determine the position of a slot to which the STA belongs.

Specifically, if the synchronization frame is transmitted at the starting position of the RAW, the timestamp information may be implicitly indicated, that is, the starting time of the RAW, and the timestamp information may not be included. Indication information may be added to the synchronization frame to indicate that the synchronization frame is located at a starting position of the RAW. If the synchronization frame is transmitted at the starting time of a slot in the RAW, the timestamp information carried by the synchronization frame may indicate which slot among N slots included in the RAW that the synchronization frame is located in, and may also indicate the specific time.

Manner 4: the time range corresponding to the timestamp information is the SP length.

APSD is a related technology that sets a concept of service period (SP). If a node occupies a channel, it sets a service period, and during this period, the node may transmit multiple frames. In other words, it may transmit multiple frames in one competition. In the ASPD, there are two specific operating modes: S-APSD and U-APSD.

In the U-APSD mode, the STA initiates a transmission process and first transmits a trigger frame. Through this frame, the STA starts a service period, namely, service period start. The AP then responds with an ACK and a data. Then, within the service period range, the STA will continue to exchange data with the AP. When all the buffers in the AP are transmitted, end of service period (EOSP) will be marked in the last data frame, and thus ending the service period, i.e., Service Period End. At the same time, there is also a negotiated maximum SP length between the STA and the AP, namely, Max SP Length.

In this manner, the time range corresponding to the timestamp information may be the maximum SP length. During the SP period, the timestamp information may be carried in the data frame transmitted from the AP for the time synchronization of the STA during the SP period, as illustrated in FIG. 7.

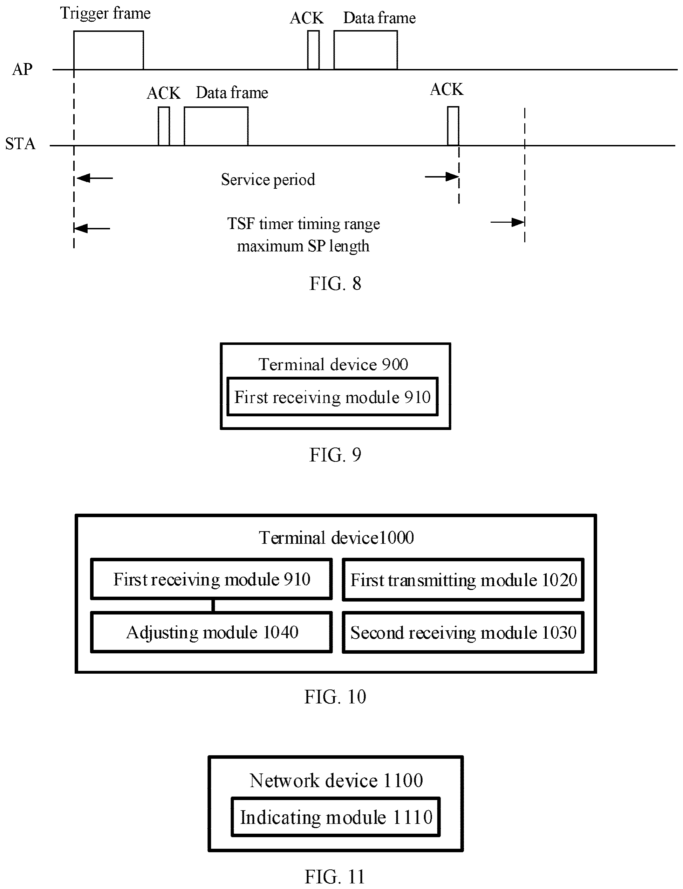

In the S-APSD mode, the SP is pre-scheduled. When the scheduled time is about to arrive, the AP will transmit a trigger frame, and the STA will wake up in advance to receive this frame, and thus starting a service period, as illustrated in FIG. 8.

Manner 5: the time range corresponding to the timestamp information is the configured length.

In manners 1 to 4, the time range corresponding to the timestamp information is set based on the existing time period or time parameter, such as the beacon interval, the TWT interval, the SP, etc. In the manner 5, the AP and the STA negotiate a time range. For example, during the association process, the AP and the STA negotiate a time range corresponding to the timestamp information, which also determines the number of bits/bytes of the timestamp information and a time range of a local TSF timer of the STA.

The time range corresponding to the timestamp information may be determined according to the type or capability of the STA served by the AP, such as the energy storage capability, the energy harvesting capability or the energy harvesting mode of the STA, which may determine the operating time of the STA at once. To this end, during the association process, the STA may report the capability information to the AP, and the AP determines and indicates the time range corresponding to the timestamp information.

In summary, in the embodiments of the present disclosure, the number of bits of the timestamp information and the corresponding time range are simplified to match the limited operating time of the zero power device. In addition, the timestamp information may be carried in the beacon frame or in other types of frames except the beacon frame, such as a trigger frame, a synchronization frame, a data frame, an NDP (null data physical layer protocol data unit (PPDU)) paging frame, etc. They may be periodic or non-periodic. These frames may be directed to a specific STA or broadcast. They may transmit the timestamp information to the STA during the process of triggering communication with the STA, which is used for synchronization within a specific time range during the communication process, without the need of continuously maintaining synchronisation by periodically transmitting the beacon frame to the STA. In addition to being used to update a local TSF timer of the STA, the timestamp information may also be used to determine the current time after the STA is awakened by energy harvesting, thereby determining whether the STA itselfhas reached its target communication time, such as TWT, RAW, SP, etc.

The embodiment of the present disclosure further provides a terminal device. FIG. 9 is a structural diagram of a terminal device 900 according to an embodiment of the present disclosure, which includes:
a first receiving module 910, configured to receive an indication for time information from a network device, where a time range corresponding to the time information is configured by the network device.

In some implementations, the time range corresponding to the time information includes at least one first time period.

In some implementations, the first time period includes at least one of the following:
a beacon frame transmission interval;
a TWT interval;
a length of an RAW; or
an SP length.

In some implementations, the time information is carried in at least one of: a beacon frame, a synchronization frame, a trigger frame, a data frame, or a paging frame.

FIG. 10 is a structural diagram of a terminal device 1000 according to an embodiment of the present disclosure. The terminal device 1000 includes one or more features of the above-mentioned embodiment of the terminal device 900. In a possible implementation, in the embodiment of the present disclosure, the method further includes:
a first transmitting module 1020, configured to transmit type and/or capability information of the terminal device; and
a second receiving module 1030, configured to receive the time range corresponding to the time information.

In some embodiments, the type and/or capability information includes at least one of: an energy storage capability, an energy harvesting capability, or an energy harvesting mode.

In some implementations, a unit of the time information includes a time unit (TU), a microsecond, or a millisecond.

In some implementations, in a case where the time range corresponding to the time information includes a beacon frame transmission interval, the first receiving module 910 is configured to receive a beacon frame, where the beacon frame is located at a starting position of the beacon frame transmission interval.

In some implementations, in a case where the time range corresponding to the time information includes two or more beacon frame transmission intervals, the first receiving module 910 is configured to receive a beacon frame, the beacon frame is located at a starting position of a beacon frame transmission interval, and the beacon frame carries the time information, and the time information indicates a position of the beacon frame transmission interval in which the beacon frame is located within the time range corresponding to the time information.

In some implementations, in a case where the time range corresponding to the time information includes a TWT interval, the first receiving module 910 is configured to receive a TWT trigger frame, and the TWT trigger frame is located at a starting position of the TWT interval.

In some implementations, in a case where the time range corresponding to the time information includes two or more TWT intervals, the first receiving module 910 is configured to receive at least one TWT trigger frame, where the TWT trigger frame is located at a starting position of a TWT interval, and the TWT trigger frame carries the time information, and the time information indicates a position of the TWT interval in which the TWT trigger frame is located within the time range corresponding to the time information.

In some implementations, in a case where the time range corresponding to the time information includes a length of an RAW, the first receiving module 910 is configured to receive a synchronization frame, where the synchronization frame is located at a starting position of the RAW.

In some implementations, in a case where the time range corresponding to the time information includes a length of an RAW, the first receiving module 910 is configured to receive at least one synchronization frame, where the synchronization frame is located at a starting position of a slot within the RAW, and the synchronization frame carries the time information, which indicates a position of the slot in which the synchronization frame is located within the RAW.

In some implementations, the network device includes an access point (AP) or an access network device.

In some implementations, the terminal device includes a zero power device.

In some implementations, the zero power device includes an ambient powered device.

In some implementations, the time information includes timestamp information.

In some implementations, an adjusting module 1040 is configured to adjust a timer according to the indication for the time information.

In some implementations, the timer includes a timing synchronization function (TSF) timer.

It should be understood that the above and other operations and/or functions of the modules in the terminal device according to the embodiment of the present disclosure are respectively for implementing the corresponding processes of the terminal device in the method 300 of FIG. 3, and for the sake of brevity, they are not repeated here.

The embodiment of the present disclosure further provides a network device. FIG. 11 is a structural diagram of a network device 1100 according to an embodiment of the present disclosure, which includes:
an indicating module 1110, configured to indicate the time information to a terminal device, and a time range corresponding to the time information is configured by the network device.

In some implementations, the time range corresponding to the time information includes at least one first time period.

In some implementations, the first time period includes at least one of the following:
a beacon frame transmission interval;
a TWT interval;
a length of an RAW; or
an SP length.

In some implementations, the time information is carried in at least one of: a beacon frame, a synchronization frame, a trigger frame, a data frame, or a paging frame.

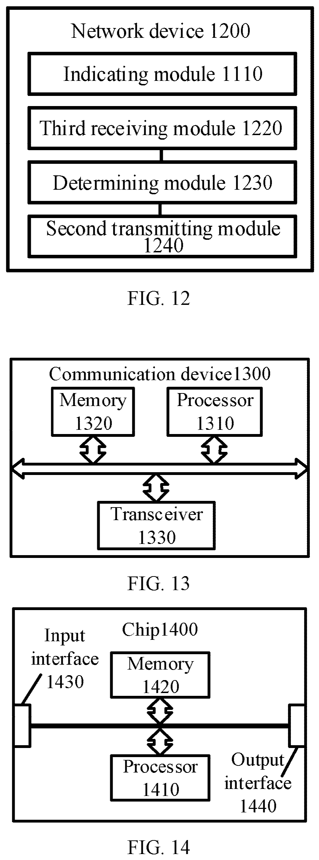

FIG. 12 is a structural diagram of a network device 1200 according to an embodiment of the present disclosure. The network device 1200 includes one or more features of the above-described embodiment of the network device 1200. In a possible implementation, in the embodiment of the present disclosure, the method further includes:
a third receiving module 1220, configured to receive type and/or capability information of the terminal device;
a determining module 1230, configured to determine, according to the type and/or capability information, the time range corresponding to the time information; and
a second transmitting module 1240, configured to transmit the time range corresponding to the time information to the terminal device.

In some implementations, the type and/or capability information includes at least one of an energy storage capability, an energy harvesting capability, or an energy harvesting mode.

In some implementations, a unit of the time information includes a time unit (TU), a microsecond, or a millisecond.

In some implementations, in a case where the time range corresponding to the time information includes a beacon frame transmission interval, the indicating module 1110 is configured to transmit a beacon frame to the terminal device, and the beacon frame is located at a starting position of the beacon frame transmission interval.

In some implementations, in a case where the time range corresponding to the time information includes two or more beacon frame transmission intervals, the indicating module 1110 is configured to transmit at least one beacon frame to the terminal device, and the beacon frame is located at a starting position of the beacon frame transmission interval. The beacon frame carries the time information, and the time information indicates a position of the beacon frame transmission interval in which the beacon frame is located within the time range corresponding to the time information.

In some implementations, in a case where the time range corresponding to the time information includes a TWT interval, the indicating module 1110 is configured to transmit a TWT trigger frame to the terminal device, and the TWT trigger frame is located at a starting position of the TWT interval.

In some implementations, in a case where the time range corresponding to the time information includes two or more TWT intervals, the indicating module 1110 is configured to transmit at least one TWT trigger frame to the terminal device, where the TWT trigger frame is located at a starting position of a TWT interval, and the TWT trigger frame carries the time information, and the time information indicates the position of the TWT interval in which the TWT trigger frame is located within the time range corresponding to the time information.

In some implementations, in a case where the time range corresponding to the time information includes a length of an RAW, the indicating module 1110 is configured to transmit a synchronization frame to the terminal device, where the synchronization frame is located at a starting position of the RAW.

In some implementations, in a case where the time range corresponding to the time information includes a length of an RAW, the indicating module 1110 is configured to transmit at least one synchronization frame to the terminal device, where the synchronization frame is located at a starting position of a slot within the RAW, and the synchronization frame carries the time information, and the time information indicates a position of the slot in which the synchronization frame is located within the RAW.

In some implementations, the network device includes an AP or an access network device.

In some implementations, the terminal device includes a zero power device.

In some implementations, the zero power device includes an ambient powered device.

In some implementations, the time information includes timestamp information.

It should be understood that the above and other operations and/or functions of the modules in the network device according to the embodiment of the present disclosure are respectively for implementing the corresponding processes of the network device in the method 200 of FIG. 2, and for the sake of brevity, they are not repeated here.

It should be noted that the functions described in the various modules (sub-modules, units or components, etc.) in the communication device in the embodiment of the present disclosure may be implemented by different modules (sub-modules, units or components, etc.) or by the same module (sub-modules, units or components, etc.). For example, the first receiving module and the second receiving module may be the different modules or the same module, and both may implement the corresponding functions in the embodiment of the present disclosure. In addition, the transmitting module and the receiving module in the embodiment of the present disclosure may be implemented by the transceiver of the device, and part or all of the remaining modules may be implemented by the processor of the device.

FIG. 13 is a schematic structural diagram of a communication device 1300 according to an embodiment of the present disclosure. The communication device 1300 illustrated in FIG. 13 includes a processor 1310, which may invoke a computer program from a memory and run the computer program to implement the method in the embodiment of the present disclosure.

In some implementations, as illustrated in FIG. 13, the communication device 1300 may further include a memory 1320. The processor 1310 may invoke a computer program from the memory 1320 and run the computer program to implement the communication device in the embodiment of the present disclosure.

The memory 1320 may be a separate device independent of the processor 1310, or may be integrated into the processor 1310.

In some implementations, as illustrated in FIG. 13, the communication device 1300 may further include a transceiver 1330, and the processor 1310 may control the transceiver 1330 to communicate with other devices, specifically, may transmit information or data to other devices, or receive information or data transmitted from other devices.

The transceiver 1330 may include a transmitter and a receiver. The transceiver 1330 may further include an antenna, and the number of the antenna(s) may be one or more.

In some implementations, the communication device 1300 may be the communication device of the embodiment of the present disclosure, and the communication device 1300 may implement the corresponding processes implemented by the communication device in various methods of the embodiment of the present disclosure, which will not be described in detail here for the sake of brevity.

FIG. 14 is a schematic structural diagram of a chip 1400 according to an embodiment of the present disclosure. The chip 1400 illustrated in FIG. 14 includes a processor 1410, which may invoke a computer program from a memory and run the computer program to implement the method in the embodiment of the present disclosure.

In some embodiments, as illustrated in FIG. 14, the chip 1400 may further include a memory 1420. The processor 1410 may invoke a computer program from the memory and run the computer program to implement the method in the embodiment of the present disclosure.

The memory 1420 may be a separate device independent of the processor 1410, or may be integrated into the processor 1410.

In some implementations, the chip 1400 may further include an input interface 1430. The processor 1410 may control the input interface 1430 to communicate with other devices or chips, and specifically, may obtain information or data transmittd from other devices or chips.

In some implementations, the chip 1400 may further include an output interface 1440. The processor 1410 may control the output interface 1440 to communicate with other devices or chips, and specifically, may output the information or data to other devices or chips.

In some implementations, the chip may be applied to the communication device in the embodiments of the present disclosure, and the chip may implement the corresponding processes implemented by the network device in various methods of the embodiments of the present disclosure. For the sake of brevity, they will not be repeated here.

It should be understood that the chip mentioned in the embodiments of the present disclosure may also be called a system-level chip, a system chip, a chip system or a system-on-chip chip, etc.

The processor mentioned above may be a general-purpose processor, a digital signal processor (DSP), a field programmable gate array (FPGA), an application specific integrated circuit (ASIC) or other programmable logic devices, transistor logic devices, discrete hardware components, etc. The general purpose processor mentioned above may be a microprocessor or any conventional processor.

The above-mentioned memory may be a volatile memory or a nonvolatile memory, or may include both volatile and nonvolatile memories. Among them, the non-volatile memory may be a read-only memory (ROM), a programmable ROM (PROM), an erasable programmable read-only memory (EPROM), an electrically erasable programmable read-only memory (EEPROM) or a flash memory. The volatile memory may be a random access memory (RAM).

It should be understood that the above-mentioned memory is exemplary but not restrictive. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM) and a direct rambus random access memory (direct rambus RAM, DR RAM), etc. That is, the memory in the embodiments of the present disclosure is intended to include but is not limited to these and any other suitable types of memory.

In the above embodiments, all or part of them may be implemented by software, hardware, firmware or any combination thereof. When implemented by the software, all or part of the implementation may be implemented in the form of a computer program product. The computer program product includes one or more computer instructions. When the computer program instructions are loaded and executed on the computer, all or part of the processes or functions described in the embodiments of the present disclosure are generated. The computer may be a general purpose computer, a special purpose computer, a computer network, or other programmable apparatuses. The computer instructions may be stored in the computer-readable storage medium, or transmitted from one computer-readable storage medium to another computer-readable storage medium. For example, the computer instructions may be transmitted from a website, a computer, a server, or a data center via wired (e.g., coaxial cable, fibre optic, digital subscriber line (DSL)) or wireless (e.g., infrared, wireless, microwave, etc.) means to another website, computer, server, or data center. The computer-readable storage medium may be any available medium that may be accessed by a computer or a data storage device, such as a server or a data center that includes one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)).

It should be understood that in the various embodiments of the present disclosure, the order of the process numbers does not imply the order of execution. The execution order of each process should be determined by its function and internal logic, and should not constitute any limitation on the implementation process of the embodiments of the present disclosure.

Those skilled in the art may clearly understand that, for the convenience and brevity of description, the specific operating processes of the systems, devices and units described above may refer to the corresponding processes in the aforementioned method embodiments and will not be repeated here.

The foregoing descriptions are merely specific implementations of the present disclosure, but the protection scope of the present disclosure is not limited thereto. Variations or replacements that any person skilled in the art could readily conceive of within the technical scope disclosed in the present disclosure shall fall within the protection scope of the present disclosure. Therefore, the protection scope of the present disclosure shall be subject to the protection scope of the claims.

## Claims

1. An information indication method, comprising:
receiving, by a terminal device, an indication for time information from a network device, wherein a time range corresponding to the time information is configured by the network device.

2. The method according to claim 1, wherein the time range corresponding to the time information comprises at least one first time period.

3. The method according to claim 2, wherein the first time period comprises at least one of the following:
a beacon frame transmission interval;
a target wake time (TWT) interval;
a length of a restricted access window (RAW); or
a service period (SP) length.

4. The method according to any one of claims 1 to 3, wherein the time information is carried in at least one of: a beacon frame, a synchronization frame, a trigger frame, a data frame or a paging frame.

5. The method according to any one of claims 1 to 4, further comprising:
transmitting, by the terminal device, type and/or capability information of the terminal device; and
receiving, by the terminal device, the time range corresponding to the time information.

6. The method according to claim 5, wherein the type and/or capability information comprises at least one of: an energy storage capability, an energy harvesting capability or an energy harvesting mode.

7. The method according to any one of claims 1 to 6, wherein a unit of the time information comprises a time unit (TU), a microsecond or a millisecond.

8. The method according to any one of claims 1 to 7, wherein in a case where the time range corresponding to the time information comprises a beacon frame transmission interval, receiving, by the terminal device, the indication for the time information from the network device comprises:
receiving, by the terminal device, a beacon frame, wherein the beacon frame is located at a starting position of the beacon frame transmission interval.

9. The method according to any one of claims 1 to 7, wherein in a case where the time range corresponding to the time information comprises two or more beacon frame transmission intervals, receiving, by the terminal device, the indication for the time information from the network device comprises:
receiving, by the terminal device, a beacon frame, wherein the beacon frame is located at a starting position of a beacon frame transmission interval, the beacon frame carries or indicates the time information, and the time information indicates a position of the beacon frame transmission interval in which the beacon frame is located within the time range corresponding to the time information.

10. The method according to any one of claims 1 to 7, wherein in a case where the time range corresponding to the time information comprises a TWT interval, receiving, by the terminal device, the indication for the time information from the network device comprises:
receiving, by the terminal device, a TWT trigger frame, wherein the TWT trigger frame is located at a starting position of the TWT interval.

11. The method according to any one of claims 1 to 7, wherein in a case where the time range corresponding to the time information comprises two or more TWT intervals, receiving, by the terminal device, the indication for the time information from the network device comprises:
receiving, by the terminal device, at least one TWT trigger frame, wherein the TWT trigger frame is located at a starting position of a TWT interval, the TWT trigger frame carries or indicates the time information, and the time information indicates a position of the TWT interval in which the TWT trigger frame is located within the time range corresponding to the time information.

12. The method according to any one of claims 1 to 7, wherein in a case where the time range corresponding to the time information comprises a length of an RAW, receiving, by the terminal device, the indication for the time information from the network device comprises:
receiving, by the terminal device, a synchronization frame, wherein the synchronization frame is located at a starting position of the RAW.

13. The method according to any one of claims 1 to 7, wherein in a case where the time range corresponding to the time information comprises a length of an RAW, receiving, by the terminal device, the indication for the time information from the network device comprises:
receiving, by the terminal device, at least one synchronization frame, wherein the synchronization frame is located at a starting position of a slot within the RAW, the synchronization frame carries or indicates the time information, and the time information indicates a position of the slot in which the synchronization frame is located within the RAW.

14. The method according to any one of claims 1 to 13, wherein the network device comprises an access point (AP) or an access network device.

15. The method according to any one of claims 1 to 14, wherein the terminal device comprises a zero power device.

16. The method according to claim 15, wherein the zero power device comprises an ambient powered device.

17. The method according to any one of claims 1 to 16, wherein the time information comprises timestamp information.

18. The method according to any one of claims 1 to 17, further comprising: adjusting, by the terminal device, a timer according to the indication for the time information.

19. The method according to claim 18, wherein the timer comprises a timing synchronization function (TSF) timer.

20. An information indication method, comprising:
indicating, by a network device, time information to a terminal device, wherein a time range corresponding to the time information is configured by the network device.

21. The method according to claim 20, wherein the time range corresponding to the time information comprises at least one first time period.

22. The method according to claim 21, wherein the first time period comprises at least one of the following:
a beacon frame transmission interval;
a target wake time (TWT) interval;
a length of a restricted access window (RAW); or
a service period (SP) length.

23. The method according to any one of claims 20 to 22, wherein the time information is carried in at least one of: a beacon frame, a synchronization frame, a trigger frame, a data frame or a paging frame.

24. The method according to any one of claims 20 to 23, further comprising:
receiving, by the network device, type and/or capability information of the terminal device;
determining, by the network device, according to the type and/or capability information, the time range corresponding to the time information; and
transmitting, by the network device, the time range corresponding to the time information to the terminal device.

25. The method according to claim 24, wherein the type and/or capability information comprises at least one of: an energy storage capability, an energy harvesting capability or an energy harvesting mode.

26. The method according to any one of claims 20 to 25, wherein a unit of the time information comprises a time unit (TU), a microsecond or a millisecond.

27. The method according to any one of claims 20 to 26, wherein in a case where the time range corresponding to the time information comprises a beacon frame transmission interval, indicating, by the network device, the time information to the terminal device comprises:
transmitting, by the network device, a beacon frame to the terminal device, wherein the beacon frame is located at a starting position of the beacon frame transmission interval.

28. The method according to any one of claims 20 to 26, wherein in a case where the time range corresponding to the time information comprises two or more beacon frame transmission intervals, indicating, by the network device, the time information to the terminal device comprises:
transmitting, by the network device, at least one beacon frame to the terminal device, wherein the beacon frame is located at a starting position of a beacon frame transmission interval, the beacon frame carries or indicates the time information, and the time information indicates a position of the beacon frame transmission interval in which the beacon frame is located within the time range corresponding to the time information.

29. The method according to any one of claims 20 to 26, wherein in a case where the time range corresponding to the time information comprises a TWT interval, indicating, by the network device, the time information to the terminal device comprises:
transmitting, by the network device, a TWT trigger frame to the terminal device, wherein the TWT trigger frame is located at a starting position of the TWT interval.

30. The method according to any one of claims 20 to 26, wherein in a case where the time range corresponding to the time information comprises two or more TWT intervals, indicating, by the network device, the time information to the terminal device comprises:
transmitting, by the network device, at least one TWT trigger frame to the terminal device, wherein the TWT trigger frame is located at a starting position of a TWT interval, the TWT trigger frame carries or indicates the time information, and the time information indicates a position of the TWT interval in which the TWT trigger frame is located within the time range corresponding to the time information.

31. The method according to any one of claims 20 to 26, wherein in a case where the time range corresponding to the time information comprises a length of an RAW, indicating, by the network device, the time information to the terminal device comprises:
transmitting, by the network device, a synchronization frame to the terminal device, wherein the synchronization frame is located at a starting position of the RAW.

32. The method according to any one of claims 20 to 26, wherein in a case where the time range corresponding to the time information comprises a length of an RAW, indicating, by the network device, the time information to the terminal device comprises:
transmitting, by the network device, at least one synchronization frame to the terminal device, wherein the synchronization frame is located at a starting position of a slot within the RAW, the synchronization frame carries or indicates the time information, and the time information indicates a position of the slot in which the synchronization frame is located within the RAW.

33. The method according to any one of claims 20 to 32, wherein the network device comprises an access point (AP) or an access network device.

34. The method according to any one of claims 20 to 33, wherein the terminal device comprises a zero power device.

35. The method according to claim 34, wherein the zero power device comprises an ambient powered device.

36. The method according to any one of claims 20 to 35, wherein the time information comprises timestamp information.

37. A terminal device, comprising:
a first receiving module, configured to receive an indication for time information from a network device, wherein a time range corresponding to the time information is configured by the network device.

38. The terminal device according to claim 37, wherein the time range corresponding to the time information comprises at least one first time period.

39. The terminal device according to claim 38, wherein the first time period comprises at least one of the following:
a beacon frame transmission interval;
a target wake time (TWT) interval;
a length of a restricted access window (RAW);or
a service period (SP) length.

40. The terminal device according to any one of claims 37 to 39, wherein the time information is carried in at least one of: a beacon frame, a synchronization frame, a trigger frame, a data frame or a paging frame.

41. The terminal device according to any one of claims 37 to 40, further comprising:
a first transmitting module, configured to transmit type and/or capability information of the terminal device;and
a second receiving module, configured to receive the time range corresponding to the time information.

42. The terminal device according to claim 41, wherein the type and/or capability information comprises at least one of: an energy storage capability, an energy harvesting capability or an energy harvesting mode.

43. The terminal device according to any one of claims 37 to 42, wherein a unit of the time information comprises a time unit (TU), a microsecond or a millisecond.

44. The terminal device according to any one of claims 37 to 43, wherein in a case where the time range corresponding to the time information comprises a beacon frame transmission interval, the first receiving module is configured to receive a beacon frame, wherein the beacon frame is located at a starting position of the beacon frame transmission interval.

45. The terminal device according to any one of claims 37 to 43, wherein in a case where the time range corresponding to the time information comprises two or more beacon frame transmission intervals, the first receiving module is configured to receive a beacon frame, wherein the beacon frame is located at a starting position of a beacon frame transmission interval, the beacon frame carries or indicates the time information, and the time information indicates a position of the beacon frame transmission interval in which the beacon frame is located within the time range corresponding to the time information.

46. The terminal device according to any one of claims 37 to 43, wherein in a case where the time range corresponding to the time information comprises a TWT interval, the first receiving module is configured to receive a TWT trigger frame, wherein the TWT trigger frame is located at a starting position of the TWT interval.

47. The terminal device according to any one of claims 37 to 43, wherein in a case where the time range corresponding to the time information comprises two or more TWT intervals, the first receiving module is configured to receive at least one TWT trigger frame, wherein the TWT trigger frame is located at a starting position of a TWT interval, the TWT trigger frame carries or indicates the time information, and the time information indicates a position of the TWT interval in which the TWT trigger frame is located within the time range corresponding to the time information.

48. The terminal device according to any one of claims 37 to 43, wherein in a case where the time range corresponding to the time information comprises a length of an RAW, the first receiving module is configured to receive a synchronization frame, wherein the synchronization frame is located at a starting position of the RAW.

49. The terminal device according to any one of claims 37 to 43, wherein in a case where the time range corresponding to the time information comprises a length of an RAW, the first receiving module is configured to receive at least one synchronization frame, wherein the synchronization frame is located at a starting position of a slot within the RAW, the synchronization frame carries or indicates the time information, and the time information indicates a position of the slot in which the synchronization frame is located within the RAW.

50. The terminal device according to any one of claims 37 to 49, wherein the network device comprises an access point (AP) or an access network device.

51. The terminal device according to any one of claims 37 to 50, wherein the terminal device comprises a zero power device.

52. The terminal device according to claim 51, wherein the zero power device comprises an ambient powered device.

53. The terminal device according to any one of claims 37 to 52, wherein the time information comprises timestamp information.

54. The terminal device according to any one of claims 37 to 53, further comprising: an adjusting module, configured to adjust a timer according to the indication for the time information.

55. The terminal device according to claim 54, wherein the timer comprises a timing synchronization function (TSF) timer.

56. A network device, comprising:
an indicating module, configured to indicate time information to a terminal device, wherein a time range corresponding to the time information is configured by the network device.

57. The network device according to claim 56, wherein the time range corresponding to the time information comprises at least one first time period.

58. The network device according to claim 57, wherein the first time period comprises at least one of the following:
a beacon frame transmission interval;
a target wake time (TWT) interval;
a length of a restricted access window (RAW); or
a service period (SP) length.

59. The network device according to any one of claims 56 to 58, wherein the time information is carried in at least one of: a beacon frame, a synchronization frame, a trigger frame, a data frame or a paging frame.

60. The network device according to any one of claims 56 to 59, further comprising:
a third receiving module, configured to receive type and/or capability information of the terminal device;
a determining module, configured to determine, according to the type and/or capability information, the time range corresponding to the time information; and
a second transmitting module, configured to transmit the time range corresponding to the time information to the terminal device.

61. The network device according to claim 60, wherein the type and/or capability information comprises at least one of: an energy storage capability, an energy harvesting capability or an energy harvesting mode.

62. The network device according to any one of claims 56 to 61, wherein a unit of the time information comprises a time unit (TU), a microsecond or a millisecond.

63. The network device according to any one of claims 56 to 62, wherein in a case where the time range corresponding to the time information comprises a beacon frame transmission interval, the indicating module is configured to transmit a beacon frame to the terminal device, wherein the beacon frame is located at a starting position of the beacon frame transmission interval.

64. The network device according to any one of claims 56 to 62, wherein in a case where the time range corresponding to the time information comprises two or more beacon frame transmission intervals, the indicating module is configured to transmit at least one beacon frame to the terminal device, wherein the beacon frame is located at a starting position of a beacon frame transmission interval, the beacon frame carries or indicates the time information, and the time information indicates a position of the beacon frame transmission interval in which the beacon frame is located within the time range corresponding to the time information.

65. The network device according to any one of claims 56 to 62, wherein in a case where the time range corresponding to the time information comprises a TWT interval, the indicating module is configured to transmit a TWT trigger frame to the terminal device, wherein the TWT trigger frame is located at a starting position of the TWT interval.

66. The network device according to any one of claims 56 to 62, wherein in a case where the time range corresponding to the time information comprises two or more TWT intervals, the indicating module is configured to transmit at least one TWT trigger frame to the terminal device, wherein the TWT trigger frame is located at a starting position of a TWT interval, the TWT trigger frame carries or indicates the time information, and the time information indicates a position of the TWT interval in which the TWT trigger frame is located within the time range corresponding to the time information.

67. The network device according to any one of claims 56 to 62, wherein in a case where the time range corresponding to the time information comprises a length of an RAW, the indicating module is configured to transmit a synchronization frame to the terminal device, wherein the synchronization frame is located at a starting position of the RAW.

68. The network device according to any one of claims 56 to 62, wherein in a case where the time range corresponding to the time information comprises a length of an RAW, the indicating module is configured to transmit at least one synchronization frame to the terminal device, wherein the synchronization frame is located at a starting position of a slot within the RAW, the synchronization frame carries or indicates the time information, and the time information indicates a position of the slot in which the synchronization frame is located within the RAW.

69. The network device according to any one of claims 56 to 68, wherein the network device comprises an access point (AP) or an access network device.

70. The network device according to any one of claims 56 to 69, wherein the terminal device comprises a zero power device.

71. The network device according to claim 70, wherein the zero power device comprises an ambient powered device.

72. The network device according to any one of claims 56 to 71, wherein the time information comprises timestamp information.

73. A communication device, comprising: a processor, a memory and a transceiver, wherein the memory is used to store a computer program, and the processor is used to invoke and run the computer program stored in the memory, and control the transceiver to perform the method according to any one of claims 1 to 19 or any one of claims 20 to 36.

74. A chip, comprising: a processor, configured to invoke a computer program from a memory and run the computer program, so as to enable a device equipped with the chip to perform the method according to any one of claims 1 to 19 or any one of claims 20 to 36.

75. A computer-readable storage medium for storing a computer program, wherein the computer program enables a computer to perform the method according to any one of claims 1 to 19 or any one of claims 20 to 36.

76. A computer program product, comprising: a computer program instruction, wherein the computer program instruction enables a computer to perform the method according to any one of claims 1 to 19 or any one of claims 20 to 36.

77. A computer program, wherein the computer program enables a computer to perform the method according to any one of claims 1 to 19 or any one of claims 20 to 36.
